# EUROPÄISCHE PATENTSCHRIFT

(11) **EP 0 902 129 B1**
(45) Veröffentlichungstag und Bekanntmachung des Hinweises auf die Patenterteilung: **27.11.2002**
(21) Anmeldenummer: 98116582.2
(22) Anmeldetag: 02.09.1998
(51) Int. Cl.: E02D 17/08, F16L 1/028

(54) **Verfahren und Vorrichtung für den Rohreinbau**
Method and device for laying pipes in the ground
Procédé et dispositif d'installation des tuyaux dans le sol

(30) Priorität: 11.09.1997 DE 19739920
(43) Veröffentlichungstag der Anmeldung: 17.03.1999
(73) Patentinhaber: Hess, Wilhelm, 51379 Leverkusen (DE)
(72) Erfinder: Hess, Wilhelm, 51379 Leverkusen (DE)
(74) Vertreter: Freischem, Werner, Dipl.-Ing.

(56) Entgegenhaltungen:
- EP-A- 0 475 382
- DE-A- 2 344 855
- DE-B- 2 456 690

## Beschreibung

Die Erfindung betrifft ein Verfahren zum Einbau eines Kanalrohrs sowie eine für die Durchführung dieses Verfahrens geeignete Verbaueinrichtung.

Aus der EP 0 475 382 A1 ist ein Verfahren zum Einbau eines Kanalrohres bekannt, welches folgende Schritte umfaßt:
a) Ausheben eines Grabens,
b) Abstützen des Grabens mit einer Verbaueinrichtung, bestehend aus entlang den Längswandungen des Grabens verlaufenden Verbauplatten, die über Spreizmittel auf Abstand zueinander gehalten sind,
c) Aufbringen eines Rohrabschnittes auf den Grabengrund und
d) Rückbau der Verbaueinrichtung und Ausziehen der Verbauplatten, wobei gleichzeitig Verfüllmaterial zwischen die Längswandungen des Grabens und den Rohrabschnitt eingefüllt wird.

Während des Rückbaus der Verbauvorrichtung verfüllen Arbeiter den Zwischenraum in dem Zwickel unterhalb des Kämpfers (Mitteldurchmesser bzw. Querschnitt des Rohres mit der größten Rohrbreite) des Rohres mit Verfüllmaterial, damit das Rohr in seiner eingebauten Position fest vom Erdreich umschlossen ist. Für diese Arbeiten verbleibt rechts und links des Rohres in dem Graben ein Arbeitsraum, in dem sich die Arbeiter bewegen können. Zusätzlich müssen beim Ausziehen der Verbauplatten die hierdurch entstehenden Freiräume mit Verfüllmaterial gefüllt und dieses Material verfestigt werden.

Aufgabe der Erfindung ist es, ein Verfahren zu schaffen, welches das Ausheben eines breiten Arbeitsraumes sowie das manuelle Verfüllen der durch das Ausziehen der Verbauplatten entstehenden Freiräume überflüssig macht. Weiterhin ist es Aufgabe der Erfindung, eine für dieses Verfahren geeignete Verbaueinrichtung zu schaffen.

Diese Aufgabe wird in bezug auf das Verfahren erfindungsgemäß durch den folgenden Verfahrensschritt gelöst:
e) Auffüllen des Zwischenraumes zwischen der Längswandung des Grabens und der Außenwand des Rohrabschnittes während des Ausziehens der Verbauplatten durch Einfüllen von fließfähigem Verfüllmaterial in eine obere Mündung mindestens eines in den Verbauplatten von oben nach unten verlaufenden Kanals, der an der unten liegenden Längskante der Verbau platten mündet.

Durch das Auffüllen des Zwischenraumes durch Einfüllen eines fließfähigen Verfüllmaterials in Kanäle, die innerhalb der Verbauplatten von oben nach unten verlaufen, wird das Verfüllmaterial zuverlässig in schwer zugängliche bzw. unzugängliche Bereiche unterhalb des Kämpfers des Rohrabschnittes gebracht. Zudem werden die Freiräume, die durch Ausziehen der Verbauplatte entstehen, direkt während des Ausziehens verfüllt. Ein Nachrutschen von naturgewachsenem Boden in den beim Ausziehen der Verbauplatte entstehenden Freiraum oder gar Bodensetzungen nach Verschließen des Grabens und Versiegeln der Oberfläche werden durch die Verfülltechnik zuverlässig ausgeschlossen.

Da das Verfüllmaterial nicht mehr von Hand in den Zwickel unterhalb des Kämpfers des Rohres eingebracht werden muß, kann der Arbeitsraum seitlich des eingebauten Rohrabschnittes vollständig entfallen. Auf diese Weise wird der für den Rohreinbau notwendige Erd-Aushub beachtlich verringert, und es können sowohl Zeit und Kosten gegenüber herkömmlichen Einbauverfahren eingespart werden.

Insbesondere im unteren Grabenabschnitt kann durch die Verbauplatte als Verfüllmaterial Beton eingegossen werden. So kann zum Beispiel der Rohrabschnitt als Betonschalung in den unteren Grabenbereich eingebracht werden und durch das Einfüllen von Beton durch die Kanäle der Verbauplatten bei simultanem Ausziehen der Verbauplatten direkt in den Graben eingegossen werden. Die äußere Gießschalung wird durch den naturgewachsenen Boden gebildet. Dieses Arbeitsverfahren ermöglicht einen Rohreinbau mit möglichst geringem Aushub.

Alternativ kann auf herkömmliche Weise die Innenwand der Verbauplatte als äußere Schalungshülle für einen aus Ortbeton gegossenen Rohrabschnitt verwendet werden. Die durch die Kanäle eingefüllten Verfüllmaterialien verschließen dann nur noch den durch Ausziehen der Verbauplatten entstehenden Freiraum.

Drittens ist es möglich, einen vorgegossenen Betonrohrabschnitt auf den Grabengrund zu legen und beim Ausziehen der Platten den Zwischenraum seitlich des Rohrabschnittes zu verfüllen. Insbesondere in diesem Fall ist als Verfüllmaterial ein Bodenmörtel geeignet, der aus mit Wasser aufgeschlämmtem Erdreich, welches sandhaltig sein kann, und Zusätzen wie Kalk, Zement oder Bentonit besteht. Dieser Bodenmörtel erhält nach dem Abfließen des Wassers eine Struktur, die dem naturgewachsenen Boden ähnlich ist. Vorzugsweise wird der beim Ausheben des Grabens entnommene naturgewachsene Boden zur Bildung des Bodenmörtels verwendet.

Die vertikalen Kanäle in der Verbauplatte müssen mit einer unteren Verschlußplatte versehen sein, damit beim Eintreiben der Verbauplatte in das Erdreich die Kanalmündungen nicht verstopfen. Diese Verschlußplatte ist vor dem Einfüllen des Verfüllmaterials und vorzugsweise vor dem Einlegen des Rohrabschnittes in eine Öffnungsstellung zu bewegen.

Vorzugsweise ist ein Anschlußstutzen für eine Schlauchkupplung eines Zuführschlauchs für Verfüllmaterial an der oberen Mündung des Kanals in der Verbauplatte vorgesehen. Das Verfüllmaterial kann aus einem Betonmischer direkt über den Schlauch in den Kanal eingefüllt werden.

Auch die obere Kanalmündung ggf. mit dem Anschluß für den Schlauch sollte während der Grabenbauarbeiten verschlossen werden. Hierfür ist eine Abdeckplatte, die an der oberen Verbauplatten-Kante befestigbar ist, vorgesehen.

Eine für die Durchführung des erfindungsgemäßen Verfahrens geeignete Grabenverbaueinrichtung besteht aus in Abständen längs zu den beiden Seiten des Grabens senkrecht anzuordnenden Stützen, die Stützen eines Stützenpaares auf Abstand haltenden Spreizen und in seitlichen Führungen der Stützen vertikal verschiebbar geführten Verbauplatten, wobei jede Verbauplatte mindestens einen vom oberen Rand zum unteren Rand der Verbauplatte führenden Kanal aufweist. Sie ist dadurch gekennzeichnet, daß eine die untere Mündung des Kanals verschließende Verschlußplatte leicht lösbar an der Verbauplatte gehalten ist.

Eine Grabenverbaueinrichtung mit den Merkmalen des Oberbegriffs von Anspruch 7 mit Verbauplatten mit vertikalen Kanälen ist aus der DE-A-24 56 690 bekannt. Bei diesen Verbauplatten dienen die oben und unten offenen Rohre zum Aussteifen der Verbauplatte. Insbesondere sollen diese Rohre, die mit horizontalen Verstärkungsteilen der Verbauplatte verbunden sind, die beim Ziehen oder Drücken der Verbauplatte auf diese einwirkenden Kräfte gleichmäßiger zu verteilen. Neu ist der Vorschlag, die untere Mündung des Kanals verschließbar auszubilden, damit das Eindringen von Erdreich und damit die Ausbildung eines Pfropfens im Bereich der unteren Kanalmündung beim Absenken der Verbauplatten in das Erdreich zuverlässig vermieden wird.

Die Verschlußplatte kann in einer Schiebeführung am unteren keilförmigen Rand der Verbauplatte gehalten werden und weist einen Vorsprung zum Ansetzen eines Werkzeuges auf. Der Vorsprung kann ein einfacher aufgeschweißter Metallklotz sein, gegen den Hammerschläge ausgeführt werden können, um die Verschlußplatte aus der Schließstellung in die Öffnungsstellung zu treiben. Die Verschlußplatte kann aber auch in die untere Mündung des Kanals mittels eines Kragens einsteckbar sein. Die Verschlußplatte wird geöffnet, wenn die Verbauplatte die unterste Stellung erreicht hat und der jeweilige Rohrabschnitt noch nicht verlegt ist. Die Verschlußplatte kann in die Schließstellung gebracht werden, wenn die Verbauplatten aus dem Graben herausgezogen sind.

Die Verschlußplatte kann auch um eine obere oder untere horizontale Achse aufklappbar an der Verbauplatte befestigt sein.

Weitere Merkmale und Vorzüge der Erfindung ergeben sich aus den Unteransprüchen und aus der nun folgenden Zeichnungsbeschreibung. Die Zeichnungen zeigen in:
- Fig. 1: eine Schnittansicht durch ein Verbauplattenpaar gemäß Schnittlinie I-I in Fig. 2,
- Fig. 2: eine Draufsicht und teilweise eine Schnittansicht nach der Schnittlinie II-II in Fig. 1,
- Fig. 3: eine Schnittansicht entsprechend Fig. 1 beim Hochziehen der Verbauplatten und Verfüllen der Rohrbettung,
- Fig. 4: eine Draufsicht auf eine in einer Schiebeführung gerührten Verschlußplatte,
- Fig. 5: eine Schnittansicht des unteren keilförmigen Endes einer Verbauplatte mit einer um eine obere Achse aufklappbaren Verschlußplatte,
- Fig. 6: eine Schnittansicht des unteren keilförmigen Endes einer Verbauplatte mit einer um eine untere Achse aufklappbaren Verschlußplatte,
- Fig. 7: eine Schnittansicht des unteren keilförmigen Endes einer Verbauplatte mit einer aufsteckbaren Verschlußplatte.

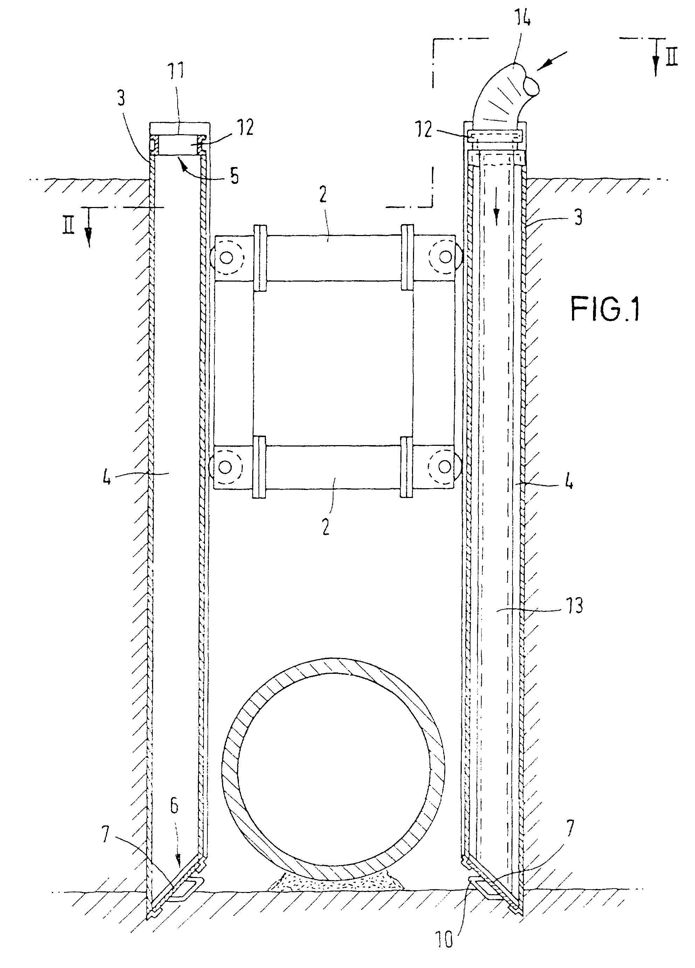

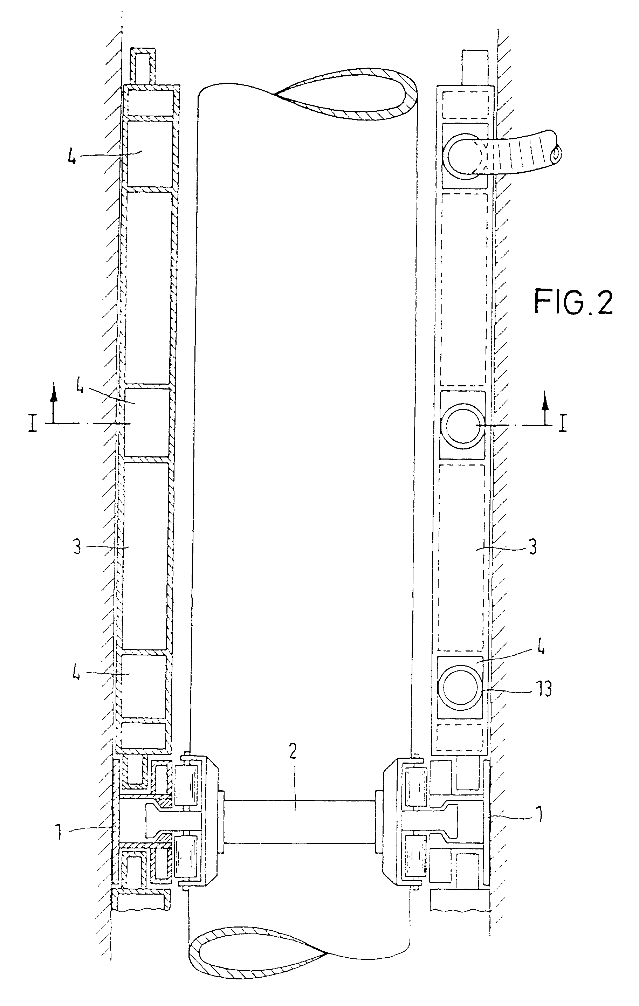

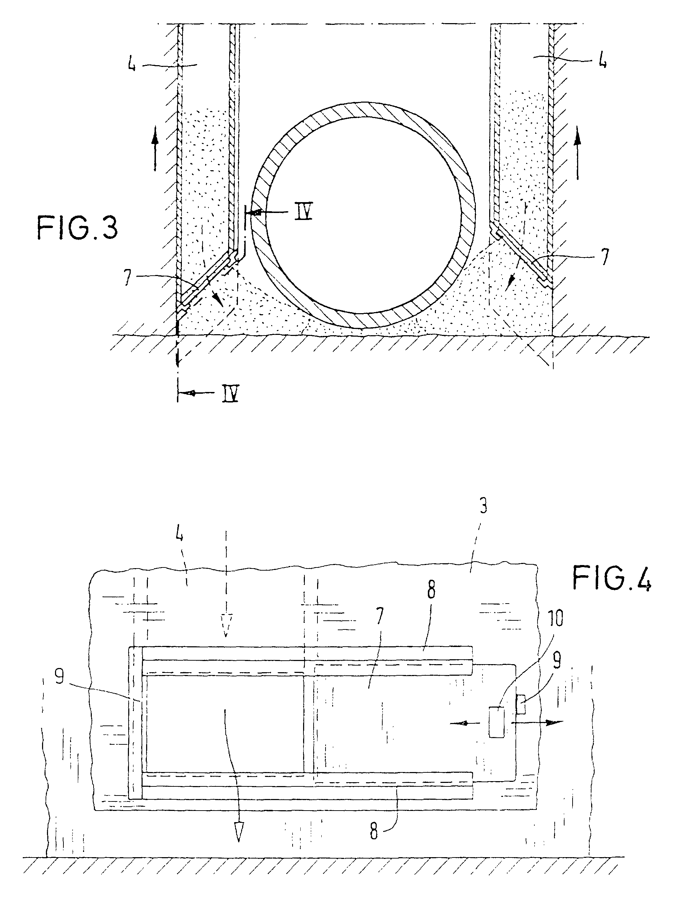

Die Fig. 1 und 2 zeigen Ansichten einer Verbaueinrichtung, die sich zusammensetzt aus Stützen 1, die von Spreizen 2 auf Abstand gehalten werden und in den Stützen 1 vertikal geführte Verbauplatten 3, in denen oben. und unten offene Kanäle 4 vorgesehen sind, durch die Verfüllmaterial in den Raum unterhalb der Verbauplatten 3 eingefüllt werden kann. Die unteren Mündungen 6 der Kanäle 4 sind durch Verschlußplatten 7 verschlossen, damit kein Erdreich beim Eintreiben der Verbauplatten in den Kanal 6 eindringen kann. Nach dem Verlegen von Rohrabschnitten auf die Grabensohle und nach einem so weiten Hochziehen der Verbauplatten, bis die schräg verlaufende Fläche des keilförmigen unteren Randes der Verbauplatte frei liegt, kann durch Verschieben der Verschlußplatte 7 die untere Mündung 6 des Kanals 4 geöffnet werden, so daß in dem Kanal 4 Verfüllmaterial von oben eingefüllt werden kann und - wie Fig. 3 zeigt - dieses Verfüllmaterial unter den schon verlegten Rohrabschnitt und unter die Verbauplatte gebracht werden kann. Das Verfüllmaterial kann entweder unmittelbar durch den Kanal 4 eingefüllt werden oder aber auch - wie die rechte Verbauplatte in Fig. 1 zeigt - durch ein Einfüllrohr 13, das innerhalb des Kanals 4 angeordnet ist. An der oberen Öffnung 5 des Kanals 4 bzw. am Einfüllrohr 13 ist ein Anschlußstutzen 12 angeordnet mit einer Kupplungsvorrichtung, an die ein Einfüllschlauch 14 schnell angekuppelt werden kann.

Wie die Fig. 1 zeigt, ist auf der Verschlußplatte 7 ein als Öse ausgebildeter Vorsprung 10 vorgesehen. Vor dem Verlegen des Rohrabschnittes wird die Verschlußplatte 7 mittels Hammerschlägen oder mittels eines an der Öse zu befestigenden Zugseiles die Verschlußplatte 7 aus der Schließstellung in eine Öffnungsstellung verschoben.

Die Fig. 4 zeigt eine in einer Schiebeführung 8 geführte Verschlußplatte 7, die in Öffnungsstellung verschoben ist. Ein Anschlag 9 verhindert, daß die Verschlußlatte 7 aus dieser Schiebeführung 8 herausgeschoben werden kann.

Mit Hilfe des auf der Verschlußplatte 7 befestigten Vorsprungs 10 kann die Verschlußplatte 7 durch Hammerschläge in die Schließstellung oder in die Öffnungsstellung getrieben werden.

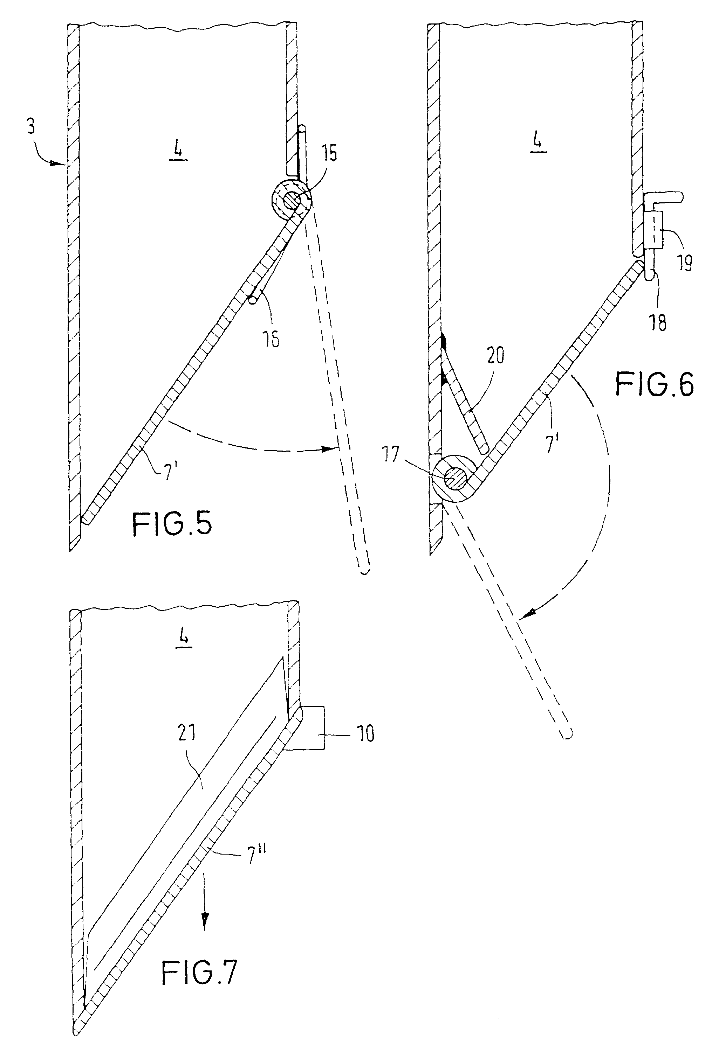

Wie die Fig. 5 und 6 zeigen, kann die Verschlußplatte 7' auch aufklappbar an der Verbauplatte 3 befestigt sein. Bei der Ausführungsform nach Fig. 5 schwenkt die Verschlußplatte 7' um eine horizontale Achse 15, die sich am oberen Rand der Verschlußplatte 7' befindet, von der Schließstellung in die Öffnungsstellung. Eine als Schenkelfeder ausgebildete Rückstellfeder 16 drückt die Verschlußplatte 7' in die Schließstellung. Hierbei liegt die Verschlußplatte 7' an Wänden der Verbauplatte 3 an. Durch Anheben der Verbauplatte 3 und Einfüllen von Verfüllmaterial öffnet sich die Verschlußplatte 7' gegen die Wirkung der Rückstellfeder 16 selbsttätig.

In Fig. 6 ist die Verschlußplatte 7' an ihrem unteren Rand um eine horizontale Achse 17 schwenkbar an der Verbauplatte 3 angelenkt. Die Verschlußplatte 7' wird von einem Riegel 18 in Schließstellung gehalten. Zum Öffnen wird der in der Führung 19 geführte Riegel 18 hochgezogen, so daß die Verschlußplatte 7' um die Achse 17 nach unten klappt, so daß das in den Kanal 4 eingefüllte Verfüllmaterial aus der unteren Mündung des Kanals 4 austreten kann. Der in den Kanalraum hineinragende Teil der Achse 17 und der nicht wegschwenkbare Teil der Verschlußplatte 7' befinden sich unter einem Abweiser 20, der dafür sorgt, daß kein Verfüllmaterial an diesen Teilen hängenbleibt.

In Fig. 7 hat die Verschlußplatte 7" einen Kragen 21, dessen Außenumfang dem Innenumfang der Kanalmündung angepaßt ist. Mit diesem Kragen 21, der zum freien Ende hin verjüngend ausgebildet ist, ist die Verschlußplatte 7" in die Mündung des Kanals 4 einsteckbar. Durch Schläge auf den Vorsprung 10 kann diese Verschlußplatte 7" von der Kanalmündung entfernt werden.

### Bezugszeichenliste:

- 1: Stütze
- 2: Spreize
- 3: Verbauplatte
- 4: Kanal
- 5: obere Öffnung
- 6: untere Mündung
- 7: verschiebbare Verschlußplatte
- 7': aufklappbare Verschlußplatte
- 7": aufsteckbare Verschlußplatte
- 8: Schiebeführung
- 9: Anschlag
- 10: Vorsprung
- 11: Abdeckplatte
- 12: Anschlußstutzen
- 13: Einfüllrohr
- 14: Schlauch
- 15: Schwenkachse
- 16: Rückstellfeder
- 17: Schwenkachse
- 18: Riegel
- 19: Riegelführung
- 20: Abweiser
- 21: Kragen
- 22: untere Kante

## Patentansprüche

1. Verfahren zum Einbau eines Kanalrohres, welches folgende Schritte umfaßt:
a) Ausheben eines Grabens,
b) Abstützen des Grabens mit einer Verbaueinrichtung, bestehend aus entlang den Längswandungen des Grabens verlaufenden Verbauplatten, die über Spreizmittel auf Abstand zueinander gehalten sind,
c) Aufbringen eines Rohrabschnittes auf den Grabengrund und
d) Rückbau der Verbaueinrichtung und Ausziehen der Verbauplatten, wobei gleichzeitig Verfüllmaterial zwischen die Längswandungen des Grabens und den Rohrabschnitt eingefüllt wird,
**gekennzeichnet durch** folgende Schritte:
e) Auffüllen des Zwischenraumes zwischen der Längswandung des Grabens und der Außenwand des Rohrabschnittes während des Ausziehens der Verbauplatten **durch** Einfüllen von fließfähigem Verfüllmaterial in eine obere Mündung mindestens eines in den Verbauplatten von oben nach unten verlaufenden Kanals, der an der unten liegenden Längskante der Verbauplatten mündet.

2. Verfahren nach Anspruch 1, **dadurch gekennzeichnet, daß** der Graben mit solcher Breite ausgehoben wird, daß im wesentlichen kein Arbeitsraum zwischen der seitlichen Außenwand des in den Graben eingebrachten Rohrabschnittes und der Innenfläche der Verbauplatten frei bleibt.

3. Verfahren nach Anspruch 1 oder 2, **dadurch gekennzeichnet, daß** als Verfüllmaterial in Schritt e) Beton verwendet wird.

4. Verfahren nach einem der Ansprüche 1 oder 2, **dadurch gekennzeichnet, daß** als Verfüllmaterial in Schritt e) ein Bodenmörtel aus mit Wasser aufgeschlämmtem Erdreich und Zusätzen wie Kalk, Zement oder Bentonit verwendet wird.

5. Verfahren nach einem der vorangehenden Ansprüche, **dadurch gekennzeichnet, daß** vor dem Einfüllen des Verfüllmaterials in den vertikalen Kanal der Verbauplatten eine Verschlußplatte von der unteren und gegebenenfalls oberen Mündung des Kanals entfernt wird.

6. Verfahren nach einem der vorangehenden Ansprüche, **dadurch gekennzeichnet, daß** vor dem Einfüllen ein Schlauch für die Zuführung des Verfüllmaterials an einen Schlauchanschluß im Bereich der oberen Mündung des vertikalen Kanals angeschlossen wird.

7. Grabenverbaueinrichtung, bestehend aus in Abständen längs und zu beiden Seiten eines Grabens senkrecht anzuordnenden Stützen (1), Spreizen (2), um die Stützen (1) eines Stützenpaares auf Abstand zu halten und in seitlichen Führungen der Stützen (1) vertikal verschiebbar zuführenden Verbauplatten (3), wobei jede Verbauplatte (3) mindestens einen vom oberen Rand zum unteren Rand der Verbauplatte (3) führenden Kanal (4) aufweist, **dadurch gekennzeichnet, daß** der Kanal (4) in der Verbauplatte (3) mit einer leicht zu öffnenden Verschlußplatte (7) versehen ist, um die untere Mündung (6) des Kanals (4) zu verschließen.

8. Grabenverbaueinrichtung nach Anspruch 7, **dadurch gekennzeichnet, daß** am unteren Rand der Verbauplatte (3) eine Schiebeführung (8) angeordnet ist, welche zwei einander gegenüberliegende Ränder einer rechteckigen Verschlußplatte (7) umgreift.

9. Grabenverbaueinrichtung nach Anspruch 8, **dadurch gekennzeichnet, daß** an den Enden der Schiebeführung (8) den Schiebeweg begrenzende Anschläge (9) angeordnet sind.

10. Grabenverbaueinrichtung nach Anspruch 7, **dadurch gekennzeichnet, daß** die Verschlußplatte (7') um eine horizontale Achse (15,17) verschwenkbar an der Verbauplatte (3) befestigt ist.

11. Grabenverbaueinrichtung nach Anspruch 10, **dadurch gekennzeichnet, daß** die Achse (15) am oberen Rand der Verschlußplatte (7') und in Nähe des oberen Randes der geneigten Fläche der keilförmigen Schneide der Verbauplatte (3) angeordnet ist.

12. Grabenverbaueinrichtung nach Anspruch 11, **gekennzeichnet durch** eine die Verschlußplatte (7') in Schließstellung drückende Rückstellfeder (16).

13. Grabenverbaueinrichtung nach Anspruch 10, **dadurch gekennzeichnet, daß** die Achse (17) am unteren Rand der Verschlußplatte (7') und in Nähe der unteren schneidenförmigen Kante der Verbauplatte (3) angeordnet ist.

14. Grabenverbaueinrichtung nach Anspruch 13, **gekennzeichnet durch** einen die Verschlußplatte (7') in Schließstellung haltenden Riegel (18), der zum Öffnen der Verschlußplatte (7') verschiebbar ist.

15. Grabenverbaueinrichtung nach Anspruch 7, **dadurch gekennzeichnet, daß** die Verschlußplatte (7") einen Kragen (21) aufweist, dessen Form und Umfang dem Innenumfang der unteren Mündung des Kanals (4) angepaßt und in diese Mündung einsteckbar ist.

16. Grabenverbaueinrichtung nach Anspruch 8 oder 15, **dadurch gekennzeichnet, daß** auf der Verschlußplatte (7) ein Vorsprung (10) zum Ansetzen eines Werkzeuges angeordnet ist.

17. Grabenverbaueinrichtung nach Anspruch 16, **dadurch gekennzeichnet, daß** der auf der Verschlußplatte (7) befestigte Vorsprung eine Öse zum Befestigen eines Hakens oder eines Zugseils ist.

18. Grabenverbaueinrichtung nach einem der Ansprüche 7 bis 17, **dadurch gekennzeichnet, daß** eine die obere Mündung (5) des Kanals (4) verschließende Abdeckplatte (11) leicht lösbar an der Verbauplatte (3) gehalten ist.

19. Grabenverbaueinrichtung nach einem der Ansprüche 7 bis 18, **dadurch gekennzeichnet, daß** in der oberen Mündung (5) des Kanals (4) ein Anschlußstutzen (12) für die Schlauchkupplung eines Schlauchs (14) für die Zuführ von Verfüllmaterial angeordnet ist.

## Claims

1. Method for installing a trench pipe that includes the following steps:
a) cutting out a trench
b) using a lining arrangement consisting of lining plates running along the longitudinal walls of the trench to stay the trench, the distance between the lining plates being maintained by means of bracings,
c) laying a pipe section on the floor of the trench and
d) retreating the lining arrangement and withdrawing the lining plates, while at the same time putting in filling material between the longitudinal walls of the trench and the pipe section,
**characterised in that** it includes the following steps:
e) filling up the spaces between the longitudinal walls of the trench and the outer wall of the pipe section while the lining plates are being pulled out by filling pourable filling material into an upper opening of at least one of the channels running from top to bottom in the lining plates and opening into the lower longitudinal edge of the lining plates.

2. Method according to claim 1, **characterised in that** the trench is cut to such a width that there is basically no free working area left between the lateral outer wall of the pipe section placed in the trench and the inner surface of the lining plates.

3. Method according to claim 1 or 2, **characterised in that** the filler material used in step e) is concrete.

4. Method according to one of the claims 1 or 2, **characterised in that** a floor mortar, consisting of soil and additives such as lime, cement or bentonite made into a slurry with water, is used as filling material.

5. Method according to one of the preceding claims, **characterised in that** a closing plate is removed from the lower and possibly upper opening before the filling material is filled into the vertical channel of the lining plates.

6. Method according to one of the preceding claims, **characterised in that** a hose for feeding in the filling material is connected to a hose connection in the vicinity of the upper opening in the vertical channel before one starts the filling process.

7. Trench lining arrangement consisting of supports (1) placed vertically at intervals along and on both sides of a trench, stays (2) to keep the distance between the supports (1) of a support pair and feeder lining plates (3) that can be shifted vertically in the lateral guides of the supports (1), whereby each lining plate (3) has at least one channel (4) running from the upper edge to the bottom edge of the lining plate (3), **characterised in that** the channel (4) in the lining plate (3) is equipped with an easily opened closing plate (7) to close the lower opening (6) in the channel (4).

8. Trench lining arrangement according to claim 7, **characterised in that** a sliding guide (8) is placed at the lower edge of the lining plate (3) and encompasses two edges of a rectangular closing plate (7) that are opposite each other.

9. Trench lining arrangement according to claim 8, **characterised in that** stops (9) limiting the slide path are placed at the ends of the sliding guide (8).

10. Trench lining arrangement according to claim 7, **characterised in that** the closing plate (7') is attached to the lining plate (3) and can be pivoted around a horizontal axle (15, 17).

11. Trench lining arrangement according to claim 10, **characterised in that** the axle (15) is placed on the upper edge of the closing plate (7') and in the vicinity of the upper edge of the inclined surface of the wedge-shaped cutting edge of the lining plate (3).

12. Trench lining arrangement according to claim 11, **characterised in that** it has a pull-back spring (16) pressing the closing plate (7') in closed position.

13. Trench lining arrangement according to claim 10, **characterised in that** the axle (17) is placed at the lower edge of the closing plate (7') and in the vicinity of the lower wedge-shaped cutting edge of the lining plate (3).

14. Trench lining arrangement according to claim 13, **characterised in that** it has a bolt (18) which holds the closing plate (7') in closed position and can be slid to open the closing plate (7').

15. Trench lining arrangement according to claim 7, **characterised in that** the closing plate (7") has a collar, the shape and circumference of which matches the inside circumference of the lower opening of the channel (4) and can be fitted into this opening.

16. Trench lining arrangement according to claim 8 or 15, **characterised in that** a projection (10) has been placed on the closing plate (7) for attaching a tool.

17. Trench lining arrangement according to claim 16, **characterised in that** the projection attached to the closing plate (7) is a ring for fixing a hook or a hoisting cable.

18. Trench lining arrangement according to claim 7 to 17, **characterised in that** a cover plate (11) closing the upper opening (5) of the channel (4) is fixed to the lining plate (3) in such a way as to be easily detachable.

19. Trench lining arrangement according to claim 7 to 18, **characterised in that** a connecting branch (12) is sited in the upper opening (5) of the channel (4) for the hose union of a hose (14) for putting in the filling material.

## Revendications

1. Procédé d'installation d'un tuyau de canalisation dans le sol, comportant les étapes suivantes :
a) Excaver une tranchée,
b) Etayer la tranchée au moyen d'un dispositif de blindage composé de panneaux de coffrage agencés le long des parois longitudinales de la tranchée et maintenus à distance les uns des autres au moyen de dispositifs écarteurs,
c) Amener une portion de tuyau au fond de la tranchée et
d) Démonter le dispositif de blindage et retirer les panneaux de coffrage tout en remplissant de matériau de remblai l'espace compris entre les parois longitudinales de la tranchée et la portion de tuyau,
**caractérisé par** les étapes suivantes :
e) Combler l'espace compris entre la paroi longitudinale de la tranchée et la paroi extérieure de la portion de tuyau pendant le retrait des panneaux de coffrage, par introduction de matériau de remblai à écoulement libre dans une ouverture supérieure d'au moins un canal traversant de haut en bas chaque panneau de coffrage et débouchant au niveau du chant longitudinal inférieur dudit panneau de coffrage.

2. Procédé selon la revendication 1, **caractérisé en ce que** la tranchée excavée présente une largeur telle qu'il ne subsiste pratiquement pas d'espace de travail entre la paroi latérale extérieure de la portion de tuyau introduite dans la tranchée et la face intérieure des panneaux de coffrage.

3. Procédé selon la revendication 1 ou 2, **caractérisé en ce que** le matériau de remblai utilisé à l'étape e) est du béton.

4. Procédé selon l'une des revendications 1 et 2, **caractérisé en ce que** le matériau de remblai employé à l'étape e) est un mortier de terre composé de terre en suspension dans de l'eau et d'additifs tels que la chaux, le ciment ou la bentonite.

5. Procédé selon l'une des revendications précédentes, **caractérisé en ce qu'**avant introduction du matériau de remblai dans le canal vertical des panneaux de coffrage, on retire une plaque d'obturation de l'ouverture inférieure et éventuellement de l'ouverture supérieure du canal.

6. Procédé selon l'une des revendications précédentes, **caractérisé en ce qu'**avant l'opération de remplissage, on raccorde un flexible d'alimentation en matériau de remblai à un raccord de flexible au niveau de l'ouverture supérieure du canal vertical.

7. Dispositif de blindage de tranchée composé d'étançons (1) destinés à être agencés verticalement, à intervalles, le long et de part et d'autre d'une tranchée, d'étrésillons (2) maintenant à distance les étançons (1) d'une paire d'étançons, et des panneaux de coffrage (3) aptes à être engagés par coulissement vertical dans des guidages latéraux que présentent les étançons (1), chaque panneau de coffrage (3) présentant au moins un canal (4) allant du bord supérieur au bord inférieur dudit panneau de coffrage (3), **caractérisé en ce que** le canal (4) ménagé dans le panneau de coffrage (3) est doté d'une plaque d'obturation (7) facile à ouvrir, permettant d'obturer l'ouverture inférieure (6) du canal (4).

8. Dispositif de blindage de tranchée selon la revendication 7, **caractérisé en ce que** le panneau de coffrage (3) présente, sur son bord inférieur, une glissière (8) enserrant deux bords opposés d'une plaque d'obturation rectangulaire (7).

9. Dispositif de blindage de tranchée selon la revendication 8, **caractérisé en ce que** des butées (9) limitant la course de coulissement sont agencées aux extrémités de la glissière (8).

10. Dispositif de blindage de tranchée selon la revendication 7, **caractérisé en ce que** la plaque d'obturation (7') est fixée au panneau de coffrage (3) avec capacité de pivotement autour d'un axe horizontal (15, 17).

11. Dispositif de blindage de tranchée selon la revendication 10, **caractérisé en ce que** l'axe (15) est agencé au niveau du bord supérieur de la plaque d'obturation (7') et à proximité du bord supérieur de la face inclinée du tranchant en forme de coin du panneau de coffrage (3).

12. Dispositif de blindage de tranchée selon la revendication 11, **caractérisé par** un ressort de rappel (16) plaquant la plaque d'obturation (7') en position de fermeture.

13. Dispositif de blindage de tranchée selon la revendication 10, **caractérisé en ce que** l'axe (17) est agencé au niveau du bord inférieur de la plaque d'obturation (7') et à proximité de l'arête inférieure en forme de coin du panneau de coffrage (3).

14. Dispositif de blindage de tranchée selon la revendication 13, **caractérisé par** un verrou (18) destiné à maintenir la plaque d'obturation (7') en position fermée et apte à être translaté pour permettre l'ouverture de la plaque d'obturation (7').

15. Dispositif de blindage de tranchée selon la revendication 7, **caractérisé en ce que** la plaque d'obturation (7") présente un rebord (21), dont la forme et le contour sont adaptés au contour intérieur de l'ouverture inférieure du canal (4) et pouvant être inséré dans ladite ouverture.

16. Dispositif de blindage de tranchée selon la revendication 8 ou 15, **caractérisé en ce qu'**un ressaut (10) est agencé sur la plaque d'obturation (7) pour permettre de rapporter un outil.

17. Dispositif de blindage de tranchée selon la revendication 16, **caractérisé en ce que** le ressaut fixé sur la plaque d'obturation (7) consiste en un oeillet permettant de fixer un crochet ou un câble de traction.

18. Dispositif de blindage de tranchée selon l'une des revendications 7 à 17, **caractérisé en ce qu'**une plaque de recouvrement (11) recouvrant l'ouverture supérieure (5) du canal (4) est maintenue facilement amovible sur le panneau de coffrage (3).

19. Dispositif de blindage de tranchée selon l'une des revendications 7 à 18, **caractérisé en ce qu'**un raccord (12) est agencé dans l'ouverture supérieure (5) du canal (4) pour permettre le raccordement d'un flexible (14) d'alimentation en matériau de remblai.
